# FASCICULE DE BREVET EUROPEEN

(11) **EP 3 328 516 B1**
(45) Date de publication et mention de la délivrance du brevet: **12.02.2020**
(21) Numéro de dépôt: 16745700.1
(22) Date de dépôt: 28.07.2016
(51) Int. Cl.: B01D 45/06, B01D 45/08

(54) **DISPOSITIF DE PIÉGEAGE DE PARTICULES DANS UN FLUX GAZEUX**
VORRICHTUNG ZUM FANGEN VON PARTIKELN IN EINEM GASSTROM
DEVICE FOR TRAPPING PARTICULES IN A GAS FLOW

(30) Priorité: 30.07.2015 FR 1557331
(43) Date de publication de la demande: 06.06.2018
(73) Titulaire: Commissariat à l'Énergie Atomique et aux Énergies Alternatives, 75015 Paris (FR)
(72) Inventeur: BOIS, Dominique, 04100 Manosque (FR); FINIZIO, Sébastien, 13490 Jouques (FR)
(74) Mandataire: Hautier, Nicolas
(86) Numéro de dépôt international: PCT/EP2016/068068
(87) Numéro de publication internationale: WO 2017/017217

(56) Documents cités:
- WO-A1-90/13734
- US-A- 2 158 863
- US-A- 3 074 218
- US-A- 4 014 671
- US-A1- 2011 023 429

## Description

### DOMAINE DE L'INVENTION

L'invention concerne un dis positif de piégeage de particules, en particulier les particules incandescentes dans un flux gazeux. Elle concerne particulièrement les particules incandescentes à forte vélocité, et plus particulièrement dans des conduits de ventilation.

Elle s'applique particulièrement au domaine de la ventilation nucléaire et trouve pour application particulièrement avantageuse les opérations de démantèlement de sites nucléaires lorsque de la matière radioactive est susceptible de se déplacer dans un flux gazeux tel que l'air. US 3 074 218 A et WO 90/13734 A1 divulguent des lispositifs de piégeage de particules dans un flux gazeux.

### ARRIERE-PLAN TECHNOLOGIQUE

Les systèmes habituellement utilisés pour piéger les particules dans les tuyauteries de ventilation sont des boîtes à chicanes. Elles sont dimensionnées de sorte à piéger toutes les particules incandescentes, pour que celles-ci n'atteignent pas les filtres situés en aval des tuyauteries.

Ceci est particulièrement utilisé dans des opérations de démantèlement nucléaire, notamment lors des opérations de découpe de pièces contaminées, autrement dit comprenant de la matière radioactive. De telles opérations ont lieu dans des enceintes mises en dépression par la ventilation, plus précisément par un débit d'extraction.

L'étanchéité de telles enceintes est assurée dynamiquement i.e. par la ventilation.

Il est donc essentiel d'avoir un niveau suffisant du débit d'extraction.

Pour cette raison, les systèmes de piégeage tels les systèmes à chicanes ne sont pas préconisés, puisqu'ils induisent une perte de charge trop importante, d'autant plus s'ils sont placés en série avec des niveaux de filtration des aérosols, et par conséquent induisent une perte de charge aéraulique très importante ce qui entraine une diminution des débits de ventilation.

Un but de l'invention est donc de proposer une solution pour piéger efficacement des particules transportées dans un flux gazeux, typiquement des particules incandescentes à forte vélocité qui peuvent être radioactives, tout en limitant les pertes de charges.

### RESUME DE L'INVENTION

La présente invention concerne un dispositif de piégeage de particules, par exemple incandescentes, dans un flux gazeux comprenant :
- une enveloppe externe comprenant au moins une ouverture d'entrée par laquelle le flux gazeux est destiné à être introduit et au moins une ouverture de sortie disposée en aval de l'ouverture d'entrée par rapport à l'écoulement du flux gazeux et par lequel le flux gazeux est destiné à être évacué,
- une première surface d'impact, de préférence sensiblement en forme de cône, le cône présentant un sommet dirigé au regard de l'ouverture d'entrée, le cône s'étendant au moins partiellement à l'intérieur de l'enveloppe externe selon une direction longitudinale.

Selon un mode de réalisation, le dispositif comprend une zone d'impact disposée à l'intérieur de l'enveloppe externe et présentant une portion de recouvrement s'étendant de préférence tout autour de la première surface d'impact et depuis la première surface d'impact de sorte à former entre la première surface d'impact et ladite portion de recouvrement une zone de piégeage des particules parvenant sur la première surface d'impact.

Cette structure de dispositif de piégeage permet de piéger de manière particulièrement efficace les particules tout en limitant les pertes de charge.

En particulier, une grande partie des particules est stoppée très en amont par la zone de piégeage formée par l'association de la première surface d'impact et de la zone d'impact.

De manière facultative l'invention peut présenter au moins l'une quelconque des caractéristiques optionnelles suivantes.

Selon un mode de réalisation, le dispositif comprend une conduite de sortie configurée pour permettre l'évacuation du flux gazeux hors de l'enveloppe externe, la conduite de sortie présentant une extrémité d'entrée située dans l'enveloppe externe en aval du cône, de préférence positionnée au regard d'une face interne du cône, l'extrémité d'entrée présentant selon une coupe transversale, perpendiculaire à ladite direction longitudinale, une section de préférence inférieure à celle de la plus grande section de la première surface d'impact, l'extrémité d'entrée étant positionnée à distance de la face interne du cône de sorte à ce que le flux gazeux puisse circuler entre la face interne de la première surface d'impact et la conduite de sortie, la conduite de sortie étant assemblée de manière étanche à l'enveloppe externe.

Selon un mode de réalisation, la portion de recouvrement s'étend en direction de l'amont et enveloppe une partie au moins de la première surface d'impact.

Selon un mode de réalisation, la portion de recouvrement s'étend depuis une face externe de la première surface d'impact et vers l'amont pour recouvrir longitudinalement une partie au moins de la première surface d'impact.

Selon un mode de réalisation, la portion de recouvrement recouvre longitudinalement la première surface d'impact sur une longueur « l » de la première surface d'impact comprise entre 0.2 et 0.3 fois la longueur « L » de la première surface d'impact, les longueurs « l » et « L » étant prises selon la direction longitudinale. Selon un mode de réalisation, la longueur L est comprise entre 180 et 200 mm (10⁻³ mètres) et la longueur l est de 50 mm.

La portion de recouvrement s'étend selon la direction longitudinale. Alternativement la portion de recouvrement s'étend selon une direction inclinée par rapport à la direction longitudinale. Cette inclinaison est typiquement inférieure ou égale à 45° par rapport à la direction longitudinale.

Selon un mode de réalisation, la portion de recouvrement présente une face interne tournée au regard de la première surface d'impact, la face interne s'étendant depuis la première surface d'impact et la face interne forme avec la première surface d'impact un angle α inférieur à 80° et de préférence d'environ 45°.

Ainsi les particules incidentes se trouvent efficacement piégées entre la face interne de la portion de recouvrement et la surface d'impact.

Selon un mode de réalisation, la portion de recouvrement est continue sur le pourtour de la première surface d'impact de manière à s'étendre tout autour de la première surface d'impact sans discontinuité.

Selon un mode de réalisation, la portion de recouvrement s'étend depuis la section maximale de la première surface d'impact.

Selon un mode de réalisation, la zone d'impact présente une extrémité amont comprenant un retour recourbé vers l'intérieur du dispositif de piégeage.

Selon un mode de réalisation, la portion de recouvrement présente une extrémité amont et une extrémité aval située au niveau de la première surface d'impact et présente une face interne s'étendant depuis l'extrémité aval jusqu'à l'extrémité amont. La zone d'impact comprend un retour s'étendant depuis l'extrémité amont pour former avec la face interne un angle β

Selon un mode de réalisation, ledit retour s'étend selon une direction principale qui forme avec la direction longitudinale un angle compris entre 70° et 110°, et de préférence entre 80° et 100°, et de préférence de l'ordre de 90°.

Ainsi le retour s'étend selon une direction perpendiculaire à la direction longitudinale et à la direction du flux gazeux incident.

Selon un mode de réalisation, la portion de recouvrement est raccordée de manière étanche à la première surface d'impact, de façon à empêcher le flux gazeux de circuler entre la première surface d'impact et la zone d'impact. Selon un mode de réalisation, la portion de recouvrement est raccordée de manière étanche au niveau de la plus grande section de la première surface d'impact.

Selon un mode de réalisation, la première surface d'impact présente une forme de cône creux. Selon un mode de réalisation, le cône est un cône de révolution. Ainsi la plus grande section de la première surface d'impact correspond à la circonférence de la base du cône de révolution.

Alternativement le cône n'est pas un cône de révolution. Il peut par exemple présenter des faces planes.

Selon un mode de réalisation, le sommet du cône est situé en dehors de l'enveloppe externe, de préférence de l'ordre de 0.9 et 1.1 fois la surface d'ouverture. Selon un autre mode de réalisation, le sommet du cône est situé à l'aplomb de l'enveloppe externe. Selon un mode de réalisation, le diamètre maximal du cône est supérieur à la surface de l'ouverture d'entrée.

Selon un mode de réalisation, la zone d'impact présente sensiblement une forme de tube. De préférence il présente une forme de cylindre creux.

Selon un mode de réalisation, l'enveloppe externe est configurée de manière à permettre le passage du flux gazeux entre l'enveloppe externe et la première surface d'impact et entre l'enveloppe externe et la zone d'impact.

Selon un mode de réalisation, l'enveloppe externe forme un caisson. Alternativement l'enveloppe externe présente une forme générale parallélépipédique dont l'axe est parallèle à la direction longitudinale.

Selon un mode de réalisation, la conduite s'étend dans l'enveloppe externe le long de ladite direction longitudinale.

Selon un mode de réalisation, l'extrémité d'entrée est positionnée à une distance « d » de la première surface d'impact. La distance « d » est comprise entre 0.2 et 0.3 fois la longueur « L » de la première surface d'impact, les longueurs « d » et « L » étant prises selon la direction longitudinale.

Selon un mode de réalisation, la distance d est de 50 mm et la longueur « L » est comprise entre 180 et 200.

Selon un mode de réalisation, l'extrémité d'entrée de la conduite de sortie est située à l'extérieur du cône de la première surface d'impact. Selon un autre mode de réalisation, l'extrémité d'entrée de la conduite de sortie est située à l'intérieur du cône de la première surface d'impact.

Selon un mode de réalisation, la conduite de sortie est assemblée de manière étanche à l'enveloppe externe au niveau de ladite ouverture de sortie de l'enveloppe externe.

Selon un mode de réalisation, la zone d'impact se prolonge vers l'aval au-delà de la première surface d'impact. Selon un mode de réalisation, la zone d'impact se prolonge vers l'aval au-delà de la première surface d'impact en formant une portion tubulaire centrée sur la direction longitudinale. Selon un mode de réalisation, la section tubulaire présente une section transversale constante.

Selon un mode de réalisation, le dispositif de piégeage comprend en outre une deuxième surface d'impact, présentant une section transversale supérieure à celle de la zone d'impact, s'étendant radialement entre la conduite de sortie et l'enveloppe externe et axialement entre la zone d'impact et l'ouverture de sortie de l'enveloppe externe.

Selon un mode de réalisation, la deuxième surface d'impact est sensiblement en forme de parallélépipédique creux. Selon un mode de réalisation, le dispositif présente un espace libre entre la zone d'impact et la deuxième surface d'impact. La portion de jonction comprend au moins une ouverture permettant à une partie du flux gazeux de passer entre la zone d'impact et la deuxième surface d'impact. Pour cela, la zone d'impact et la deuxième surface d'impact présentent des pattes de fixation qui sont situées en vis-à-vis de manière à laisser circuler le gaz entre les pattes et la zone d'impact et la deuxième surface d'impact.

Selon un mode de réalisation, l'enveloppe externe et la deuxième surface d'impact sont conformées de manière à définir entre eux un passage pour le flux gazeux, de manière à ce que le flux gazeux puisse passer entre une paroi longitudinale de l'enveloppe externe et la deuxième surface d'impact jusqu'à atteindre une paroi de fond de l'enveloppe externe.

Ainsi la paroi de fond de l'enveloppe externe définit une quatrième surface d'impact pour les particules du flux gazeux. Ainsi l'espace situé entre la paroi de fond de l'enveloppe externe et la deuxième surface d'impact constitue une zone de piégeage pour les particules du flux gazeux.

Selon un mode de réalisation, le dispositif est configuré de manière à ce que le flux gazeux remonte depuis la paroi de fond vers l'amont et entre une face interne de la deuxième surface d'impact et la conduite de sortie jusqu'à parvenir à l'extrémité d'entrée de la conduite de sortie.

Selon un mode de réalisation, le dispositif comprend au moins un premier filtre situé entre la deuxième surface d'impact et la conduite de sortie.

Selon un mode de réalisation, le premier filtre s'étend sur tout le pourtour de la conduite de sortie et s'étend radialement depuis la conduite de sortie jusqu'à la deuxième surface d'impact. Ainsi le filtre occupe tout l'espace situé entre la deuxième surface d'impact et la conduite de sortie. Tout le flux gazeux passant entre la deuxième surface d'impact et la conduite de sortie passe donc au travers du filtre. Les particules sont ainsi efficacement piégées.

Selon un mode de réalisation, le premier filtre comprend au moins l'un parmi : un treillis métallique, un filtre en métal fritté.

Selon un mode de réalisation, le dispositif est configuré de manière à ce que le flux gazeux traverse le filtre selon une direction parallèle à la direction longitudinale.

Par rapport à un filtre traversé radialement, cela permet de prévoir une épaisseur importante de filtre à traverser tout en réduisant les pertes de charge et l'encombrement du dispositif. Par exemple il devient alors possible de prévoir un filtre relativement peu dense pour ne pas induire trop de pertes de charge tout en prévoyant une épaisseur importante de filtre pour piéger efficacement les particules.

Selon un mode de réalisation, le cône de la première surface d'impact est creux. Le dispositif comprend au moins un deuxième filtre situé dans le creux du cône. Le deuxième filtre comprend de préférence un treillis métallique ou un filtre en métal fritté.

Selon un autre mode de réalisation, l'invention est un élément participant à un système de confinement d'une zone à confiner comprenant une enveloppe de confinement enveloppant au moins en partie la zone à confiner, au moins un dispositif d'expulsion, vers l'extérieur de enveloppe de confinement et sous forme d'un flux gazeux, d'un gaz compris à l'intérieur de l'enveloppe de confinement et au moins un dispositif de piégeage selon l'invention, le dispositif de piégeage étant configuré pour recevoir au niveau de son ouverture d'entrée le flux gazeux expulsé par le dispositif d'expulsion et en piéger les particules.

### BREVE INTRODUCTION DES FIGURES

D'autres caractéristiques, buts et avantages de la présente invention apparaitront à la lecture de la description détaillée qui suit, en regard des dessins annexés, donnés à titre d'exemples, non limitatifs, et sur lesquels :
- La FIGURE 1 est une vue en perspective et en coupe partielle d'un dispositif de piégeage de particules selon un exemple de réalisation de l'invention.
- La FIGURE 2 est une vue en coupe longitudinale du dispositif de piégeage illustré en figure 1.
- La FIGURE 3 est une vue en coupe longitudinale du dispositif de piégeage illustré en figure 1.
- La FIGURE 4 est identique à la figure 3 et fait apparaître des exemples de chemins que le flux peut emprunter.
- La FIGURE 5 est une vue en coupe radiale du dispositif de piégeage illustré en figure 1.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DETAILLEE

Il est précisé que dans le cadre de la présente invention, le terme « recouvrir », « sur » ne signifie pas obligatoirement «au contact de ». Ainsi, par exemple, le recouvrement d'une pièce par une autre pièce, ne signifie pas obligatoirement que les deux pièces sont directement au contact l'une de l'autre mais cela signifie que l'une des pièces recouvre au moins partiellement l'autre en étant soit directement à son contact, soit en étant séparée d'elle par une autre pièce, ou un revêtement ou encore tout autre élément.

Dans la présente invention l'amont et l'aval font référence à l'écoulement du fluide à l'intérieur du dispositif de piégeage.

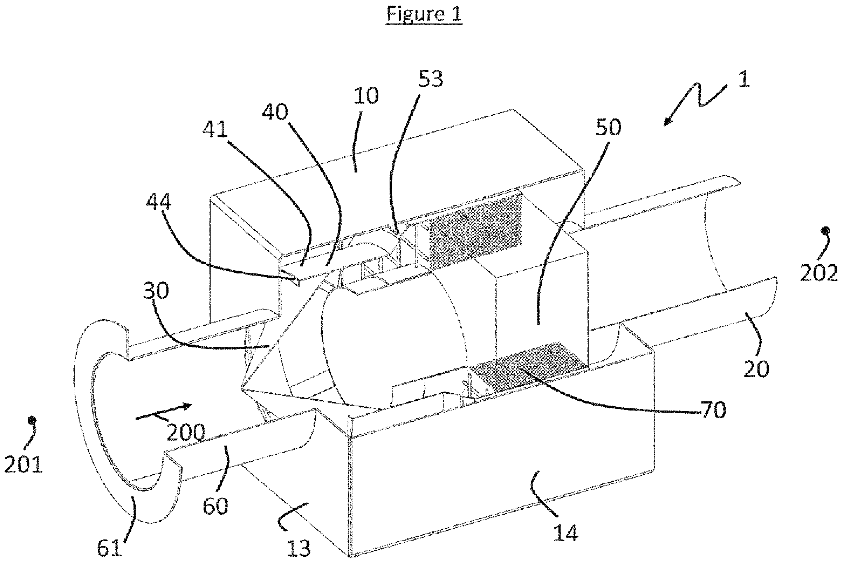

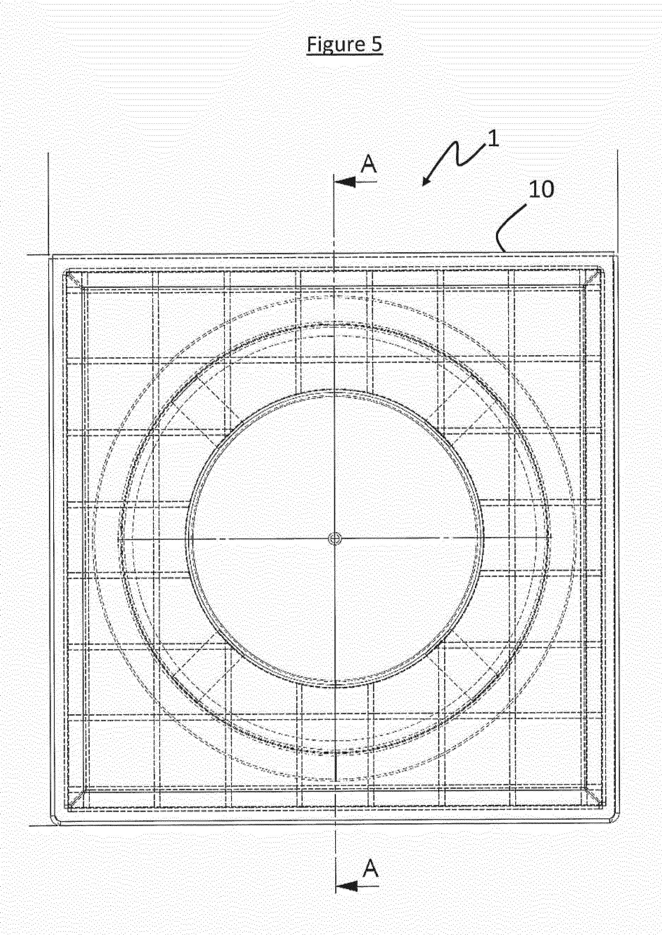

Un exemple de dispositif de piégeage selon l'invention va maintenant être décrit en référence aux figures 1 à 5.

Le dispositif comprend une enveloppe externe 10 formant une enceinte étanche à l'exception d'ouvertures d'entrée 11 et de sortie 12. Sur cet exemple non limitatif, il n'y a qu'une seule ouverture d'entrée 11 et une seule ouverture de sortie 12.

De préférence, ces ouvertures sont circulaires afin de faciliter le raccordement au réseau de gaine circulaire. L'ouverture d'entrée 11 est fluidiquement connectée, de manière étanche à une conduite d'entrée 60 dont une extrémité amont 61 est destinée à recevoir le flux gazeux qui va pénétrer dans le dispositif 1 de piégeage.

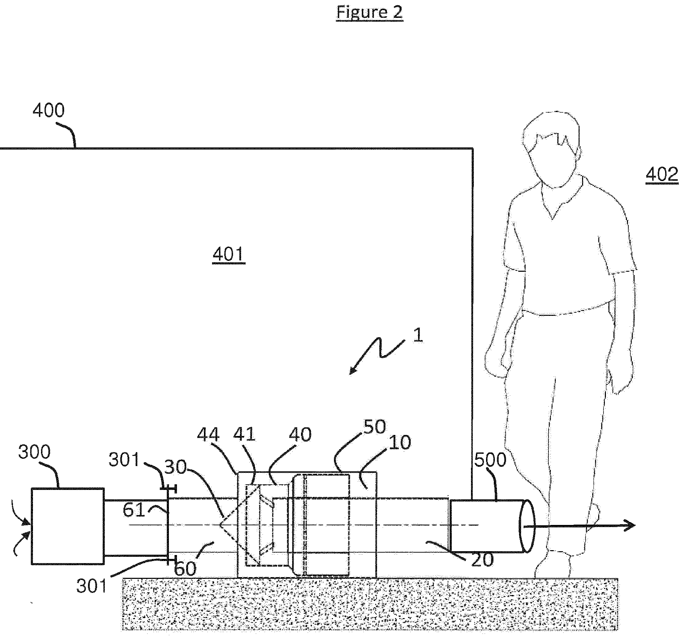

L'extrémité amont 61 de la conduite d'entrée 60 est configurée pour être couplée à un dispositif de réseau de ventilation et/ou d'une enceinte de confinement. Typiquement, un dispositif d'expulsion 300 du réseau de ventilation aspire l'air ou plus généralement le gaz compris dans une zone à confiner qui est enveloppée par une enveloppe de confinement 400 et expulse vers l'extérieur 402 de l'enveloppe de confinement 400 ce gaz sous forme d'un flux gazeux dans une conduite de sortie 500, par exemple pour générer une dépression dans l'enveloppe de confinement 400. Le réseau de ventilation 300 ainsi que l'enveloppe de confinement 400 sont illustrés sur la figure 2.

L'extrémité amont 61 de la conduite d'entrée 60 présente une surface de couplage telle qu'une collerette permettant d'assurer une étanchéité fiable avec le dispositif d'expulsion 300, par exemple au moyen de visserie 301 et d'un joint annulaire.

L'extrémité aval de la conduite d'entrée 60 est fluidiquement couplée à l'ouverture d'entrée 11 de l'enveloppe externe 10 du dispositif de piégeage 1. Par exemple, la conduite 60 est soudée sur une paroi d'entrée 13 de l'enveloppe externe 10.

L'ouverture de sortie 12 est fluidiquement connectée, c'est-à-dire de manière étanche, avec une conduite de sortie 20 dont une partie au moins se prolonge au-delà d'une paroi de fond 15 de l'enveloppe externe 10.

Sur l'exemple illustré, l'enveloppe externe 10 présente entre ses parois d'entrée 13 et de fond 15 des parois longitudinales 14 planes. L'enveloppe externe 10 forme ainsi un caisson comme illustré en figure 1. Ce mode de réalisation permet de facilement stocker, déplacer et stabiliser au sol le caisson comme illustré en figure 2.

Selon d'autres modes de réalisation les parois d'entrée 13 et de fond 15 sont jointes par une paroi cylindrique.

Par ailleurs, les parois d'entrée 13 et de fond 15 peuvent être planes comme sur l'exemple illustré ou incurvées.

De préférence, la conduite d'entrée 60 et l'ouverture d'entrée 11 sont centrées sur un axe central du dispositif 1 parallèle à une direction longitudinale 200. Dans le mode de réalisation illustré la direction longitudinale 200 est parallèle au flux gazeux incident arrivant dans le dispositif de piégeage. Sur les exemples illustrés cette direction longitudinale 200 est horizontale. On qualifie de direction transversale une direction perpendiculaire à la direction longitudinale 200.

De préférence également, la conduite de sortie 20 et l'ouverture de sortie 12 sont également centrées sur l'axe central du dispositif de piégeage.

L'enveloppe externe 10 renferme plusieurs organes qui participent à l'écoulement du flux gazeux depuis l'ouverture d'entrée 11 jusqu'à l'ouverture de sortie 12, afin de stopper et collecter les particules transportées par ce flux gazeux et tout en limitant les pertes de charge.

Parmi ces organes figure une première surface d'impact 30 sur laquelle est propulsé le flux gazeux. De manière avantageuse, cette première surface d'impact 30 présente une forme de cône dont le sommet 31 est orienté vers l'amont 21. De préférence, le sommet 31 du cône est centré sur l'ouverture d'entrée 11 et sur la conduite d'entrée 60. Le sommet 31 est positionné sur l'axe central du dispositif de piégeage. Ainsi le flux gazeux s'écoulant selon la direction longitudinale 200 rencontre la première surface d'impact 30 selon l'axe du cône.

Sur l'exemple illustré, le cône est un cône de révolution. La base 32 du cône est ainsi circulaire. Cela permet de favoriser un écoulement homogène du fluide tout autour de la face externe 33 du cône diminuant ainsi les pertes de charge.

Dans le cadre de la présente invention, d'autres formes de première surface d'impact pourront être envisagées. Notamment, la première surface d'impact peut être un cône présentant des faces, par exemple quatre ou plus, planes. Dans ce cas, la base du cône est un polygone.

De préférence, l'angle au sommet 31 du cône est de 90° sur l'exemple illustré. Plus généralement il est compris entre 60 et 120°.

De préférence le sommet 31 du cône est longitudinalement situé en amont de la paroi d'entrée 13 et de l'ouverture d'entrée 11. Ainsi, une partie de la première surface d'impact 30 est située dans la conduite d'entrée 60 et hors de l'enveloppe externe 10.

La base de la première surface d'impact 30 est quant à elle située en aval de l'ouverture d'entrée 11.

Ainsi, l'ouverture d'entrée 11 et la première surface d'impact 30 définissent ensemble et entre elles un passage d'entrée 16 pour le flux gazeux. Ce dernier ne peut pénétrer dans l'enveloppe externe 10 que par ce passage d'entrée 16. Sur l'exemple illustré, ce passage d'entrée 16 forme, selon une section transversale, un anneau autour du cône. De préférence, la surface du passage d'entrée 16 est comprise entre 0.9 et 1.1 fois la surface de l'ouverture d'entrée 11.

Le dispositif comprend une zone d'impact 40. Cette zone d'impact 40 présente une portion de recouvrement 41 qui entoure le cône radialement, de préférence sur tout son pourtour. De préférence, la portion de recouvrement 41 recouvre le cône sur une partie seulement de la dimension longitudinale de ce dernier.

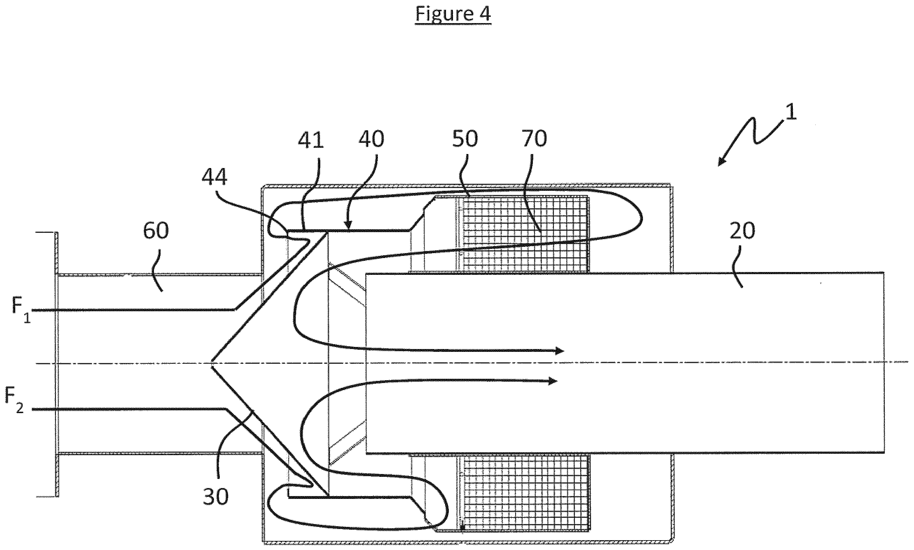

De manière avantageuse, la portion de recouvrement 41 forme avec le cône une cavité à l'intérieur de laquelle s'engouffre une partie au moins du flux gazeux et où sont piégées un grand nombre de particules. Cette cavité forme une zone 101 de piégeage pour les particules comme illustré par les flux F₁ et F₂ en figure 4.

De préférence, la portion de recouvrement 41 s'étend depuis la face externe 33 du cône et en direction de l'amont 201 et forme un angle α avec la surface 33 du cône. Ainsi sur l'exemple illustré, l'angle entre la face externe du cône et la face interne 47 de la portion de recouvrement 41 est égal à 45°. Cela permet de piéger efficacement les particules tout en maintenant un écoulement important du flux.

De préférence, la portion de recouvrement 41 recouvre longitudinalement la première surface d'impact 30 sur une longueur « l » de la première surface d'impact 30 comprise entre 0.2 et 0.3 fois la longueur « L » de la première surface d'impact 30, les longueurs « l » et « L » étant prises selon la direction longitudinale 200. De préférence, la longueur « L » est comprise entre 180 et 200 et de préférence, la longueur « l » est de 50 mm.

Selon le mode de réalisation illustré, la portion de recouvrement 41 est continue sur le pourtour de la première surface d'impact 30 de manière à s'étendre tout autour de la première surface d'impact 30 sans discontinuité.

Selon un mode de réalisation avantageux mais non limitatif, la zone d'impact 40 présente une extrémité amont 42 comprenant un retour 44 recourbé vers l'intérieur du dispositif de piégeage. Plus précisément, la face interne 47 de la portion de recouvrement 41 présente une extrémité aval 43 située au niveau de la première surface d'impact 30 et une extrémité amont 42. La face interne 47 de la portion de recouvrement 41 s'étend entre ces deux extrémités 42, 43. Dans l'exemple illustré, le retour 44 s'étend depuis l'extrémité amont 42 de ladite face interne 47 pour former avec cette dernière un angle β de 90°. Il s'avère que ce retour est particulièrement avantageux pour piéger efficacement les particules.

Le dispositif 1 de piégeage présente un passage pour le flux gazeux entre ledit retour 44 et la paroi d'entrée 13.

La portion de recouvrement 41 est raccordée, de préférence de manière étanche au niveau de la première surface d'impact 30, de façon à empêcher le flux gazeux de circuler entre la première surface d'impact 30 et la zone d'impact 40. De préférence, la portion de recouvrement 41 est raccordée de manière étanche au niveau de la plus grande section de la première surface d'impact 30, c'est-à-dire sur les figures illustrées, au niveau de la base 32 du cône.

La zone d'impact 40 se prolonge vers l'aval 202 au-delà de la première surface d'impact 30. Sur l'exemple illustré, elle présente une portion en prolongation 45 qui s'étend depuis la base 32 du cône et forme une portion 45 tubulaire centrée sur la direction longitudinale 200. Sur une partie au moins de sa dimension longitudinale, cette portion de prolongation 45 présente une section transversale constante.

L'enveloppe externe 10 est configurée de manière à permettre le passage du flux gazeux entre l'enveloppe externe 10 et une face externe 48 de la deuxième 40 surface d'impact, comme illustré en figure 4 par les flux F1 et F2.

La partie 46 forme un cône solidaire de la virole 45 ce qui permet de diriger les particules incandescentes résiduelles vers la paroi d'impact 55 et le filtre 70.

Le dispositif 1 de piégeage comprend en outre une deuxième surface d'impact 50 longitudinalement située, en partie au moins, en aval 202 de la zone d'impact 40 et en amont 201 de la paroi de fond 15. La deuxième surface d'impact 50 présente une section transversale supérieure à celle de la zone d'impact 40. Elle s'étend radialement entre la conduite de sortie 20 et l'enveloppe externe 10.

La deuxième surface d'impact 50 est sensiblement en forme de parallélépipède creux et le dispositif de piégeage présente une portion de jonction 46, 52 entre la zone d'impact 40 et la deuxième surface d'impact 50. La portion de jonction 46, 52 présente une forme inclinée en forme de tronc de pyramide, permettant à une partie au moins du flux de s'écouler depuis l'espace formé entre la face externe 48 de la portion de prolongation 45 et l'enveloppe externe 10 jusqu'à l'espace formé entre la face externe 54 de la deuxième surface d'impact 50 et l'enveloppe externe 10 comme illustré par le flux F1. Par exemple la portion de prolongation 45 se prolonge par une portion évasée 46 et qui joint ou qui arrive à proximité d'une portion évasée 52 portée par la deuxième surface d'impact 50.

Avantageusement, la section radiale de l'espace formé entre la face externe 54 de la deuxième surface d'impact 50 et l'enveloppe externe 10 est inférieure à la section radiale de l'espace formé entre la face externe 48 de la portion de prolongation 44 et l'enveloppe externe 10. Cela permet de créer un effet accélérant le flux gazeux dans le fond de l'enveloppe externe 10.

Selon un mode de réalisation avantageux, la portion de jonction 46, 52, présente au moins une ouverture 53 permettant à une partie du flux gazeux de passer entre la zone d'impact 40 et la deuxième surface d'impact 50, comme illustré par le flux F2 en figure 4. A cet effet, la zone d'impact 40 et la deuxième surface d'impact 50 présentent par exemple des pattes de fixation qui sont situées en vis-à-vis de manière à laisser circuler le gaz entre les pattes.

L'enveloppe externe 10 et la troisième 50 surface d'impact sont conformées de manière à définir entre elles un passage 90 pour le flux gazeux, de manière à ce que le flux gazeux puisse passer entre une paroi longitudinale 14 de l'enveloppe externe 10 et la face externe 54 de la deuxième surface d'impact 50 jusqu'à atteindre une paroi de fond 15 de l'enveloppe externe 10. Ainsi, la paroi de fond 15 de l'enveloppe externe 10 définit une quatrième surface d'impact pour les particules du flux gazeux. L'espace situé entre la paroi de fond 15 de l'enveloppe externe 10 et la deuxième surface d'impact 50 constitue une zone 102 de piégeage pour les particules du flux gazeux.

L'extrémité aval de la deuxième surface d'impact 50 est longitudinalement située au droit de la conduite de sortie 20. De préférence, toute la deuxième surface d'impact 50 est longitudinalement située au droit de la conduite de sortie 20. Ainsi la deuxième surface d'impact 50 enveloppe une partie de la conduite de sortie 20 tel un manchon.

La deuxième surface d'impact 50 présente une forme généralement parallélépipédique, de préférence de section constante à l'exception de la portion évasée 52. La section de son passage interne est plus large que la section externe de la conduite de sortie 20 qu'elle entoure, définissant ainsi un passage pour le flux gazeux entre la conduite de sortie 20 et une face interne 55 de la deuxième surface d'impact 50. Ainsi, le flux gazeux provenant de la paroi de fond 15 s'engouffre dans ce passage. Le flux gazeux remonte depuis la paroi de fond 15 vers l'amont 201 et entre une face interne 55 de la deuxième surface d'impact 50 et la conduite de sortie 20 jusqu'à parvenir à l'extrémité d'entrée 21 de la conduite de sortie 20. Cette extrémité d'entrée 21 est longitudinalement située au droit de la portion de prolongation 48 de la zone d'impact 40.

Alternativement, la troisième section d'impact 50 pourrait présenter une forme cylindrique ou tubulaire.

De manière avantageuse, le dispositif de piégeage comprend au moins un premier filtre 70 situé entre la face interne 55 de la deuxième surface d'impact 50 et la face externe de la conduite de sortie 20.

Le premier filtre 70 s'étend sur tout le pourtour de la conduite de sortie 20 et s'étend radialement depuis la conduite de sortie 20 jusqu'à la deuxième surface d'impact 50. Ainsi le filtre 70 occupe tout l'espace situé entre la deuxième surface d'impact 50 et la conduite de sortie 20. Tout le flux gazeux passant entre la deuxième surface d'impact 50 et la conduite de sortie 20 passe donc au travers du filtre 70, comme cela est représenté par le flux F1. Les particules sont ainsi efficacement piégées. Selon un mode de réalisation avantageux, ce premier filtre 70 comprend un treillis métallique ce qui permet de stopper les particules incandescentes sans dégrader le filtre 70. De manière alternative ou cumulée, le premier filtre 70 comprend un filtre en métal fritté.

De manière avantageuse, le filtre 70 est traversé par le flux gazeux selon une direction parallèle à la direction longitudinale 200. Par rapport à un filtre traversé radialement, cela permet de prévoir une épaisseur importante de filtre à traverser tout en réduisant les pertes de charge et l'encombrement du dispositif. Par exemple il devient alors possible de prévoir un filtre relativement peu dense pour ne pas induire trop de pertes de charge tout en prévoyant une épaisseur importante de filtre pour piéger efficacement les particules.

Une distance « d » sépare l'extrémité d'entrée 21 de la conduite de sortie 20 de la face interne 34 de la première surface d'impact 30, ce qui permet de ménager un passage pour le flux gazeux entre la conduite de sortie 20 et la première surface d'impact 30. Le flux gazeux s'écoulant depuis la face externe de la conduite de sortie 20 peut ainsi s'engouffrer à l'intérieur de cette dernière depuis son extrémité 21 pour s'écouler vers l'aval en direction de l'ouverture de sortie 12 et de l'extrémité de sortie 22 de la conduite de sortie 20. Ce cheminement du flux est illustré par les flux F1 et F2.

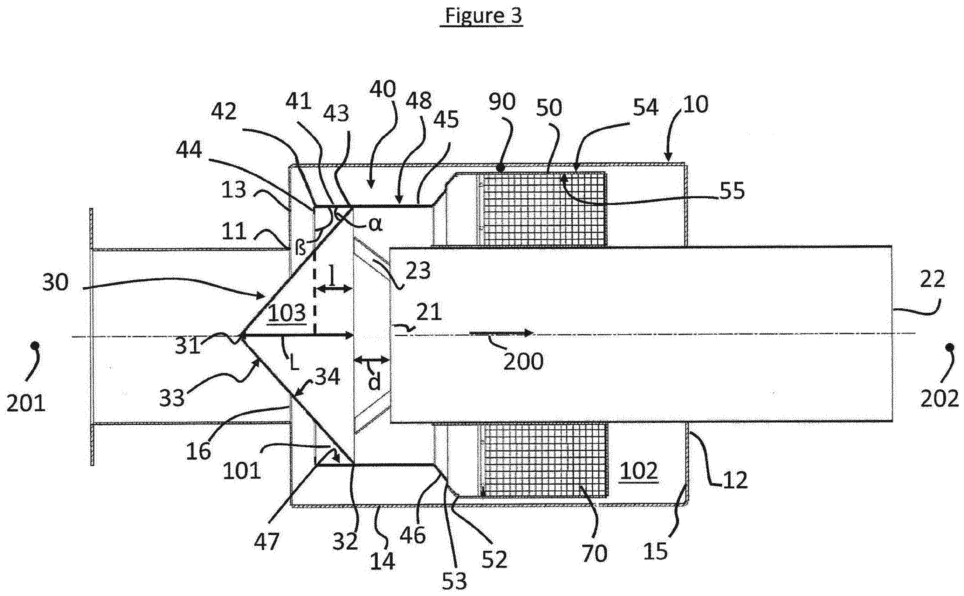

Selon le mode de réalisation illustré l'extrémité d'entrée 21 de la conduite de sortie 20 est située à l'extérieur de la première surface d'impact 30. La distance « d » entre la conduite de sortie 20 et la première surface d'impact 30 est comprise entre 0.2 et 0.3 fois la longueur « L » de la première surface d'impact 30, les longueurs « d » et « L » étant prises selon la direction longitudinale 200. La distance d est illustrée en figure 3. La distance d est par exemple, dans l'exemple considéré, d'environ 50 mm, et la longueur « L » est comprise entre 180 et 200 mm.

Selon un autre mode de réalisation, non illustré, l'extrémité d'entrée 21 de la conduite de sortie 20 est située à l'intérieur de la première surface d'impact 30. Ainsi la distance d s'étend depuis l'extrémité aval de la première surface d'impact 30 et vers l'amont jusqu'à l'extrémité d'entrée 21 de la conduite de sortie 20.

Des pattes de fixation 23 assurent un maintien robuste entre le cône et la conduite de sortie 20.

Selon un mode de réalisation avantageux et comme cela apparaît clairement en figures 3 et 4, le cône de la première surface d'impact 30 est creux. Une partie au moins du flux gazeux provenant de l'espace formé entre d'une part les faces internes de la zone d'impact 40 et de la deuxième surface d'impact 50 et d'autre part la face externe de la conduite de sortie 20, peut ainsi pénétrer dans le creux du cône et venir au contact de la face interne 34 du cône. Cette face interne 34 constitue une zone de piégeage 103 additionnelle pour les particules.

Selon un mode de réalisation avantageux, on prévoit un filtre, tel un treillis métallique, non représenté sur les figures, dans le creux du cône. Les particules incandescentes qui seraient encore présentes dans le flux se trouvent alors efficacement piégées.

L'invention concerne également un système de confinement d'une zone à confiner, le système comprenant une enveloppe de confinement 400 enveloppant au moins en partie la zone à confiner, au moins un dispositif de piégeage 1 et au moins un dispositif d'expulsion 300. Ce dernier expulse vers l'extérieur 402 de l'enveloppe de confinement 400 et sous forme d'un flux gazeux, le gaz compris à l'intérieur de l'enveloppe de confinement 400. Avant son expulsion vers l'extérieur le flux gazeux généré par le dispositif d'expulsion 300 est injecté dans le dispositif de piégeage 1 pour en piéger les particules.

Le dispositif d'expulsion 300 crée avantageusement une pression négative à l'intérieur 401 de l'enveloppe de confinement 400, c'est-à-dire une pression inférieure à celle régnant à l'extérieur 402 de l'enveloppe 400.

Un tel système est particulièrement efficace pour confiner une zone radioactive, par exemple un site radioactif en cours de démantèlement.

Au vu de la description qui précède, il apparaît clairement que l'invention propose une solution particulièrement efficace pour piéger les particules en particulier incandescentes, d'un flux gazeux tout en limitant les pertes de charge. Cela est particulièrement intéressant pour les particules à forte vélocité.

Un exemple non limitatif va maintenant être décrit en détail.

De préférence, le dispositif est réalisé en métal. En particulier, la zone d'impact 40, la deuxième surface d'impact 50, la conduite de sortie 20 sont en acier au carbone ou en acier inoxydable
- le cône présente un angle au somment de 90°;
- une longueur « L » de 190 mm ;
- la portion de recouvrement 41 présente une longueur « l » de 50 mm et s'étend parallèlement à la direction longitudinale 200 ;
- le retour 44 s'étend perpendiculairement à la direction longitudinale 200 et forme un anneau dont le grand diamètre est de 304 mm épaisseur 2 mm et le petit diamètre est de 284 mm.
- La deuxième surface d'impact 50 présente une section carrée de 380 mm épaisseur 2 mm et une longueur de 184.5 mm.
- la conduite de sortie 20 présente un diamètre externe de 205 mm épaisseur 3 mm et une longueur totale de 255 mm La longueur de la conduite de sortie logée à l'intérieur de l'enveloppe externe 10 est de 315 mm

L'enveloppe externe 10 présente une hauteur de 394 mm, la hauteur étant prise verticalement entre sa paroi de fond jusqu'à sa paroi de dessus, et une largeur de 496 mm prise entre ses parois d'entrée 13 et de fond 15.

Toutes les longueurs sont mesurées parallèlement à la direction longitudinale 200.

La présente invention n'est pas limitée aux modes de réalisation précédemment décrits mais s'étend à tout mode de réalisation entrant dans la portée des revendications.

## Revendications

1. Dispositif (1) de piégeage de particules, en particulier incandescentes dans un flux gazeux comprenant :
- une enveloppe externe (10) comprenant au moins une ouverture d'entrée (11) par laquelle le flux gazeux est destiné à être introduit et au moins une ouverture de sortie (12) disposée en aval de l'ouverture d'entrée (11) par rapport à l'écoulement du flux gazeux et par lequel le flux gazeux est destiné à être évacué,
- une première surface d'impact (30), sensiblement en forme de cône, le cône présentant un sommet (31) dirigé au regard de l'ouverture d'entrée (11), le cône s'étendant au moins partiellement à l'intérieur de l'enveloppe externe (10) selon une direction longitudinale (200),
- une conduite de sortie (20) configurée pour permettre l'évacuation du flux gazeux hors de l'enveloppe externe (10), la conduite de sortie (20) présentant une extrémité d'entrée (21) située dans l'enveloppe externe (10) en aval du sommet (31) du cône, positionnée au regard d'une face interne (34) du cône, l'extrémité d'entrée (21) présentant selon une coupe transversale, perpendiculaire à ladite direction longitudinale (200), une section inférieure à celle de la plus grande section de la première surface d'impact (30), l'extrémité d'entrée (21) étant positionnée à distance de la face interne (34) du cône de sorte à ce que le flux gazeux puisse circuler entre la face interne (34) de la première surface d'impact (30) et la conduite de sortie (20), la conduite de sortie (20) étant assemblée de manière étanche à l'enveloppe externe (10):
- une zone d'impact (40) disposée à l'intérieur de l'enveloppe externe (10) et présentant une portion de recouvrement (41) s'étendant tout autour de la première surface d'impact (30) et depuis la première surface d'impact (30), de sorte à former entre la première surface d'impact (30) et ladite portion de recouvrement (41) une zone (101) de piégeage des particules,
**caractérisé en ce que** le dispositif comprend en outre une deuxième surface d'impact (50), présentant une section transversale supérieure à celle de la zone d'impact (40), s'étendant radialement entre la conduite de sortie (20) et l'enveloppe externe (10) et axialement entre la zone d'impact (40) et l'ouverture de sortie (12) de l'enveloppe externe (10),**en ce que**
l'enveloppe externe (10) et la deuxième surface d'impact (50) sont conformées de manière à définir entre eux un passage (90) pour le flux gazeux, de manière à ce que le flux gazeux puisse passer entre une paroi longitudinale (14) de l'enveloppe externe (10) et la deuxième surface d'impact (50) jusqu'à atteindre une paroi de fond (15) de l'enveloppe externe (10),
et **en ce que** la conduite de sortie (12) et une face interne (55) de la deuxième surface d'impact (50) sont conformées de manière à définir entre eux un passage additionnel pour le flux gazeux, de manière à ce que le flux gazeux puisse passer par ledit passage additionnel pour remonter depuis la paroi de fond (15) vers l'amont jusqu'à parvenir à l'extrémité d'entrée (21) de la conduite de sortie (20).

2. Dispositif (1) de piégeage selon la revendication 1, dans lequel la portion de recouvrement (41) s'étend depuis une face externe (33) de la première surface d'impact (30) et vers l'amont pour recouvrir longitudinalement une partie au moins de la première surface d'impact (30).

3. Dispositif (1) de piégeage selon l'une quelconque des revendications précédentes, dans lequel la portion de recouvrement (41) recouvre longitudinalement la première surface d'impact (30) sur une longueur « I » de la première surface d'impact (30) comprise entre 0.2 et 0.3 fois la longueur « L » de la première surface d'impact (30), les longueurs « I » et « L » étant prises selon la direction longitudinale (200), et de préférence dans lequel la longueur L est comprise entre 180 et 200 mm et dans lequel la longueur I est de préférence d'environ 50 mm.

4. Dispositif (1) de piégeage selon l'une quelconque des revendications précédentes, dans lequel la portion de recouvrement (41) présente une face interne (47) tournée au regard de la première surface d'impact (30), la face interne (47) formant avec la première surface d'impact (30) un angle α inférieur à 80°, et de préférence d'environ 45°.

5. Dispositif (1) de piégeage selon l'une quelconque des revendications précédentes, dans lequel la portion de recouvrement (41) présente une extrémité amont (42) et une extrémité avale (43) située au niveau de la première surface d'impact (30) et présente une face interne (47) s'étendant depuis l'extrémité avale (43) jusqu'à l'extrémité amont (42), la zone d'impact (40) comprenant un retour (44) s'étendant depuis l'extrémité amont (42) pour former avec la face interne (47) un angle β compris entre 30° et 135° .

6. Dispositif (1) de piégeage selon l'une quelconque des revendications précédentes, dans lequel la portion de recouvrement (41) est raccordée de manière étanche à la première surface d'impact (30), de façon à empêcher le flux gazeux de circuler entre la première surface d'impact (30) et la zone d'impact (40).

7. Dispositif (1) de piégeage selon l'une quelconque des revendications précédentes, dans lequel la première surface d'impact (30) présente une forme de cône creux, et dans lequel le sommet (31) du cône est situé en dehors de l'enveloppe externe (10).

8. Dispositif (1) de piégeage selon l'une quelconque des revendications précédentes, dans lequel l'enveloppe externe (10) est configurée de manière à permettre le passage du flux gazeux entre l'enveloppe externe (10) et la première (30) surface d'impact et entre l'enveloppe externe (10) et la zone d'impact (40).

9. Dispositif (1) de piégeage selon l'une quelconque des revendications précédentes, dans lequel la conduite de sortie (20) s'étend dans l'enveloppe externe (10) le long de ladite direction longitudinale (200), dans lequel l'extrémité d'entrée (21) est positionnée à une distance « d » de la première surface d'impact (30), dans lequel la distance « d » est comprise entre 0.2 et 0.3 fois la longueur « L » de la première surface d'impact (30), les longueurs « d » et « L » étant prises selon la direction longitudinale (200).

10. Dispositif (1) de piégeage selon l'une quelconque des revendications précédentes, dans lequel la zone d'impact (40) se prolonge vers l'aval au-delà de la première surface d'impact (30) en formant une portion tubulaire centrée sur la direction longitudinale (200).

11. Dispositif (1) de piégeage selon l'une quelconque des revendications précédentes, dans lequel la deuxième surface d'impact (50) est sensiblement en forme de cylindre creux et le dispositif (1) présente une portion de jonction (46, 52) entre la zone d'impact (40) et la deuxième surface d'impact (50) et dans lequel la portion de jonction comprend au moins une ouverture (53) permettant à une partie du flux gazeux de passer entre la zone d'impact (40) et la deuxième surface d'impact (50).

12. Dispositif (1) de piégeage selon l'une quelconque des revendications précédentes, comprenant au moins un premier filtre (70) situé entre la deuxième surface d'impact (50) et la conduite de sortie (20), et de préférence dans lequel le premier filtre (70) s'étend sur tout le pourtour de la conduite de sortie (20) et s'étend radialement depuis la conduite de sortie (20) jusqu'à la deuxième surface d'impact (50).

13. Dispositif (1) de piégeage selon l'une quelconque des revendications précédentes, dans lequel le cône de la première surface d'impact (30) est creux et dans lequel le dispositif (1) comprend au moins un deuxième filtre situé dans le creux du cône, le deuxième filtre comprenant de préférence un treillis métallique ou un filtre en métal fritté.

14. Dispositif (1) de piégeage selon l'une quelconque des revendications précédentes, dans lequel le sommet (31) de la première surface d'impact (30) est situé dans l'ouverture d'entrée (11).

15. Système de confinement d'une zone à confiner comprenant une enveloppe de confinement (400) enveloppant au moins en partie la zone à confiner, au moins un dispositif d'expulsion (300), vers l'extérieur de enveloppe de confinement (400) et sous forme d'un flux gazeux, d'un gaz compris à l'intérieur de l'enveloppe de confinement (400) et au moins un dispositif (1) de piégeage selon l'une quelconque des revendications précédentes, le dispositif (1) de piégeage étant configuré pour recevoir au niveau de son ouverture d'entrée (11) le flux gazeux expulsé par le dispositif d'expulsion (300) et en piéger les particules.

## Patentansprüche

1. Vorrichtung (1) zum Fangen von Partikeln, insbesondere glühenden, in einem Gasstrom, umfassend:
- eine Außenhülle (10), die mindestens eine Einlassöffnung (11) umfasst, durch die der Gasstrom bestimmt ist, eingeleitet zu werden, und mindestens eine Auslassöffnung (12), die in Bezug auf die Strömung des Gasstroms stromabwärts der Einlassöffnung (11) angeordnet ist und durch die der Gasstrom bestimmt ist, ausgeleitet zu werden,
- eine erste Prallfläche (30), im Wesentlichen in Form eines Kegels, wobei der Kegel eine Spitze (31) aufweist, die der Einlassöffnung (11) zugerichtet ist, wobei sich der Kegel mindestens teilweise in einer Längsrichtung (200) im Inneren der Außenhülle (10) erstreckt,
- eine Auslassleitung (20), die dafür konfiguriert ist, das Ausleiten des Gasstroms aus der Außenhülle (10) heraus zu ermöglichen, wobei die Auslassleitung (20) ein Einlassende (21) aufweist, das sich stromabwärts der Spitze (31) des Kegels einer Innenseite (34) des Kegels zugewandt positioniert in der Außenhülle (10) befindet, wobei das Einlassende (21) in einem Querschnitt senkrecht zur Längsrichtung (200) einen kleineren Querschnitt aufweist als jenen des größten Querschnitts der ersten Prallfläche (30), wobei das Einlassende (21) in Abstand zur Innenseite (34) des Kegels positioniert ist, sodass der Gasstrom zwischen der Innenseite (34) der ersten Prallfläche (30) und der Auslassleitung (20) zirkulieren kann, wobei die Auslassleitung (20) dicht mit der Außenhülle (10) zusammengebaut ist,
- eine Prallzone (40), die im Inneren der Außenhülle (10) angeordnet ist und einen Deckabschnitt (41) aufweist, der sich ganz um die erste Prallfläche (30) herum und von der ersten Prallfläche (30) aus erstreckt, um zwischen der ersten Prallfläche (30) und dem Deckabschnitt (41) eine Zone (101) zum Fangen der Partikel zu bilden,
**dadurch gekennzeichnet, dass** die Vorrichtung weiter eine zweite Prallfläche (50) umfasst, die einen größeren Querschnitt als jenen der Prallzone (40) aufweist, die sich radial zwischen der Auslassleitung (20) und der Außenhülle (10) und axial zwischen der Prallzone (40) und der Auslassöffnung (12) der Außenhülle (10) erstreckt, dadurch, dass
die Außenhülle (10) und die zweite Prallfläche (50) so ausgestaltet sind, dass sie zwischen sich einen Durchtritt (90) für den Gasstrom definieren, sodass der Gasstrom zwischen einer Längswand (14) der Außenhülle (10) und der zweiten Prallfläche (50) hindurchtreten kann, bis er eine Bodenwand (15) der Außenhülle (10) erreicht,
und dadurch, dass die Auslassleitung (12) und eine Innenseite (55) der zweiten Prallfläche (50) so ausgestaltet sind, dass sie zwischen sich einen zusätzlichen Durchtritt für den Gasstrom definieren, sodass der Gasstrom durch den zusätzlichen Durchtritt durchtreten kann, um von der Bodenwand (15) aus stromaufwärts aufzusteigen, bis er zum Einlassende (21) der Auslassleitung (20) gelangt.

2. Fangvorrichtung (1) nach Anspruch 1, wobei sich der Deckabschnitt (41) von einer Außenseite (33) der ersten Prallfläche (30) aus und stromaufwärts erstreckt, um längs mindestens einen Teil der ersten Prallfläche (30) zu bedecken.

3. Fangvorrichtung (1) nach einem der vorstehenden Ansprüche, wobei der Deckabschnitt (41) die erste Prallfläche (30) längs auf einer Länge "l" der ersten Prallfläche (30) im Bereich zwischen dem 0,2- und 0,3-fachen der Länge "L" der ersten Prallfläche (30) bedeckt, wobei die Längen "l" und "L" in der Längsrichtung (200) gemessen werden, und wobei die Länge L vorzugsweise im Bereich zwischen 180 und 200 mm liegt, und wobei die Länge l vorzugsweise etwa 50 mm beträgt.

4. Fangvorrichtung (1) nach einem der vorstehenden Ansprüche, wobei der Deckabschnitt (41) eine Innenseite (47) aufweist, die der ersten Prallfläche (30) zugedreht ist, wobei die Innenseite (47) mit der ersten Prallfläche (30) einen Winkel α von kleiner als 80° und vorzugsweise von etwa 45° bildet.

5. Fangvorrichtung (1) nach einem der vorstehenden Ansprüche, wobei der Deckabschnitt (41) ein stromaufwärtiges Ende (42) und ein stromabwärtiges Ende (43) aufweist, das sich im Bereich der ersten Prallfläche (30) befindet und eine Innenseite (47) aufweist, die sich vom stromabwärtigen Ende (43) aus bis zum stromaufwärtigen Ende (42) erstreckt, wobei die Prallzone (40) eine Kehre (44) umfasst, die sich vom stromaufwärtigen Ende (42) aus erstreckt, um mit der Innenseite (47) einen Winkel β im Bereich zwischen 30° und 135° zu bilden.

6. Fangvorrichtung (1) nach einem der vorstehenden Ansprüche, wobei der Deckabschnitt (41) dicht an die erste Prallfläche (30) angeschlossen ist, um zu verhindern, dass der Gasstrom zwischen der ersten Prallfläche (30) und der Prallzone (40) zirkuliert.

7. Fangvorrichtung (1) nach einem der vorstehenden Ansprüche, wobei die erste Prallfläche (30) eine Form eines Hohlkegels aufweist, und wobei sich die Spitze (31) des Kegels außerhalb der Außenhülle (10) befindet.

8. Fangvorrichtung (1) nach einem der vorstehenden Ansprüche, wobei die Außenhülle (10) so konfiguriert ist, dass sie den Durchtritt des Gasstroms zwischen der Außenhülle (10) und der ersten Prallfläche (30) und zwischen der Außenhülle (10) und der Prallzone (40) ermöglicht.

9. Fangvorrichtung (1) nach einem der vorstehenden Ansprüche, wobei sich die Auslassleitung (20) in der Außenhülle (10) entlang der Längsrichtung (200) erstreckt, wobei das Einlassende (21) in einem Abstand "d" zur ersten Prallfläche (30) positioniert ist, wobei der Abstand "d" im Bereich zwischen dem 0,2- und 0,3-fachen der Länge "L" der ersten Prallfläche (30) liegt, wobei die Längen "d" und "L" in der Längsrichtung (200) gemessen werden.

10. Fangvorrichtung (1) nach einem der vorstehenden Ansprüche, wobei sich die Prallzone (40) unter Bilden eines rohrförmigen Abschnitts, der auf der Längsrichtung (200) zentriert ist, stromabwärts über die erste Prallfläche (30) hinaus fortsetzt.

11. Fangvorrichtung (1) nach einem der vorstehenden Ansprüche, wobei die zweite Prallfläche (50) im Wesentlichen in Form eines Hohlzylinders vorliegt und die Vorrichtung (1) einen Übergangsabschnitt (46, 52) zwischen der Prallzone (40) und der zweiten Prallfläche (50) aufweist, und wobei der Übergangsabschnitt mindestens eine Öffnung (53) umfasst, die es einem Teil des Gasstroms ermöglicht, zwischen der Prallzone (40) und der zweiten Prallfläche (50) hindurchzutreten.

12. Fangvorrichtung (1) nach einem der vorstehenden Ansprüche, die mindestens einen ersten Filter (70) umfasst, der sich zwischen der zweiten Prallfläche (50) und der Auslassleitung (20) befindet, und wobei sich der erste Filter (70) vorzugsweise auf dem ganzen Umfang der Auslassleitung (20) erstreckt und sich radial von der Auslassleitung (20) aus bis zur zweiten Prallfläche (50) erstreckt.

13. Fangvorrichtung (1) nach einem der vorstehenden Ansprüche, wobei der Kegel der ersten Prallfläche (30) hohl ist, und wobei die Vorrichtung (1) mindestens einen zweiten Filter umfasst, der sich in der Höhlung des Kegels befindet, wobei der zweite Filter vorzugsweise ein Metallgitter oder einen Filter aus Sintermetall umfasst.

14. Fangvorrichtung (1) nach einem der vorstehenden Ansprüche, wobei sich die Spitze (31) der ersten Prallfläche (30) in der Einlassöffnung (11) befindet.

15. System zum Einschließen einer Zone, die eingeschlossen werden soll, umfassend eine Einschlusshülle (400), welche die einzuschließende Zone mindestens zum Teil umhüllt, mindestens eine Vorrichtung zum Ausstoßen (300) eines im Inneren der Einschlusshülle (400) enthaltenen Gases zur Außenseite der Einschlusshülle (400) und in Form eines Gasstroms, und mindestens eine Fangvorrichtung (1) nach einem der vorstehenden Ansprüche, wobei die Fangvorrichtung (1) dafür konfiguriert ist, den von der Ausstoßvorrichtung (300) ausgestoßenen Gasstrom im Bereich ihrer Einlassöffnung (11) aufzunehmen und dessen Partikel zu fangen.

## Claims

1. Device (1) for trapping particles, in particular incandescent particles, in a gas flow comprising:
- an outer casing (10) comprising at least one inlet opening (11) through which the gas flow is intended to be introduced and at least one outlet opening (12) arranged downstream of the inlet opening (11) with respect to the flow of the gas flow and by which the gas flow is intended to be evacuated,
- a first impact surface (30), substantially cone-shaped, the cone having a top (31) directed facing the inlet opening (11), the cone extending at least partially inside the outer casing (10) along a longitudinal direction (200),
- an outlet pipe (20) configured to make it possible for the evacuation of the gas flow outside of the outer casing (10), the outlet pipe (20) having an inlet end (21) situated in the outer casing (10) downstream of the top (31) of the cone, positioned facing an inner face (34) of the cone, the inlet end (21) having, according to a transversal cross-section, perpendicular to said longitudinal direction (200), a section lower to that of the largest cross-section of the first impact surface (30), the inlet end (21) being positioned at a distance from the inner face (34) of the cone such that the gas flow can circulate between the inner face (34) of the first impact surface (30) and the outlet pipe (20), the outlet pipe (20) being assembled in a sealed manner to the outer casing (10):
- an impact zone (40) arranged inside the outer casing (10) and having a covering portion (41) extending all around the first impact surface (30) and from the first impact surface (30), so as to form between the first impact surface (30) and said portion for covering (41) a zone (101) for trapping particles,
**characterised in that** the device further comprises a second impact surface (50), having a transversal cross-section greater than that of the impact zone (40), extending radially between the outlet pipe (20) and the outer casing (10) and axially between the impact zone (40) and the outlet opening (12) of the outer casing (10),
**in that** the outer casing (10) and the second impact surface (50) are shaped so as to define between them a passage (90) for the gas flow, such that the gas flow can pass between a longitudinal wall (14) of the outer casing (10) and the second impact surface (50) until reaching a bottom wall (15) of the outer casing (10),
and **in that** the outlet pipe (12) and an inner face (55) of the second impact surface (50) are shaped so as to define between them an additional passage for the gas flow, such that the gas flow can pass through said additional passage to rise from the bottom wall (15) upstream until reaching the inlet end (21) of the outlet pipe (20).

2. Trapping device (1) according to claim 1, wherein the covering portion (41) extends from an outer face (33) of the first impact surface (30) and upstream to longitudinally cover at least one portion of the first impact surface (30).

3. Trapping device (1) according to any one of the preceding claims, wherein the covering portion (41) longitudinally covers the first impact surface (30) over a length "I" of the first impact surface (30) of between 0.2 and 0.3 times the length "L" of the first impact surface (30), the lengths "I" and "L" being taken along the longitudinal direction (200), and preferably wherein the length L is of between 180 and 200mm and wherein the length I is preferably around 50mm.

4. Trapping device (1) according to any one of the preceding claims, wherein the covering portion (41) has an inner face (47) rotated facing the first impact surface (30), the inner face (47) forming with the first impact surface (30), an angle α less than 80°, and preferably around 45°.

5. Trapping device (1) according to any one of the preceding claims, wherein the covering portion (41) has an upstream end (42) and a downstream end (43) situated at the level of the first impact surface (30) and has an inner face (47) extending from the downstream end (43) to the upstream end (42), the impact zone (40) comprising a return (44) extending from the upstream end (42) to form with the inner face (47), an angle β of between 30° and 135°.

6. Trapping device (1) according to any one of the preceding claims, wherein the covering portion (41) is connected in a sealed manner to the first impact surface (30), so as to prevent the gas flow from circulating between the first impact surface (30) and the impact zone (40).

7. Trapping device (1) according to any one of the preceding claims, wherein the first impact surface (30) has a hollow cone shape, and wherein the top (31) of the cone is situated outside of the outer casing (10).

8. Trapping device (1) according to any one of the preceding claims, wherein the outer casing (10) is configured so as to make it possible for the passage of the gas flow between the outer casing (10) and the first (30) impact surface and between the outer casing (10) and the impact zone (40).

9. Trapping device (1) according to any one of the preceding claims, wherein the outlet pipe (20) extends into the outer casing (10) along said longitudinal direction (200), wherein the inlet end (21) is positioned at a distance "d" from the first impact surface (30), wherein the distance "d" is between 0.2 and 0.3 times the length "L" of the first impact surface (30), the lengths "d" and "L" being taken along the longitudinal direction (200).

10. Trapping device (1) according to any one of the preceding claims, wherein the impact zone (40) is extends downstream beyond the first impact surface (30) by forming a tubular portion centred on the longitudinal direction (200).

11. Trapping device (1) according to any one of the preceding claims, wherein the second impact surface (50) is substantially hollow cylinder-shaped and the device (1) has a junction portion (46, 52) between the impact zone (40) and the second impact surface (50) and wherein the junction portion comprises at least one opening (53) making it possible for some of the gas flow to pass between the impact zone (40) and the second impact surface (50).

12. Trapping device (1) according to any one of the preceding claims, comprising at least one first filter (70) situated between the second impact surface (50) and the outlet pipe (20), and preferably wherein the first filter (70) extends over the whole perimeter of the outlet pipe (20) and extends radially from the outlet pipe (20) to the second impact surface (50).

13. Trapping device (1) according to any one of the preceding claims, wherein the cone of the first impact surface (30) is hollow and wherein the device (1) comprises at least one second filter situated in the cavity of the cone, the second filter preferably comprising a metal mesh or a sintered metal filter.

14. Trapping device (1) according to any one of the preceding claims, wherein the top (31) of the first impact surface (30) is situated in the inlet opening (11).

15. System for confining a zone to be confined comprising a confinement casing (400) surrounding at least partially the zone to be confined, at least one expulsion device (300) outwards of the confinement casing (400) and in the form of a gas flow, of a gas comprised inside the confinement casing (400) and at least one trapping device (1) according to any one of the preceding claims, the trapping device (1) being configured to receive, at the level of the inlet opening (11) thereof, the gas flow expelled by the expulsion device (300) and trapping particles from it.
